(19)

Europäisches
Patentamt
European
Patent Office
Office européen
des brevets

(11) **EP 4 775 463 A1**

(12) **EUROPEAN PATENT APPLICATION**

(43) Date of publication:
**15.07.2026 Bulletin 2026/29**

(21) Application number: **25227320.6**

(22) Date of filing: **28.12.2025**

(51) International Patent Classification (IPC):
**B60T 8/88** (2006.01)    **B60T 17/22** (2006.01)
**B60W 40/12** (2012.01)    **G01M 17/007** (2006.01)

(52) Cooperative Patent Classification (CPC):
**B60T 17/221; B60T 8/885; B60W 40/12;**
**G01M 17/007; B60T 2270/406; B60W 2040/1338**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **09.01.2025 CN 202510037330**

(71) Applicant: **Catarc Automotive Test Center**
**(Tianjin) Co., Ltd.**
**Tianjin 300300 (CN)**

(72) Inventors:
 • **LIU, Lei**
  **Tianjin, 300300 (CN)**
 • **ZHU, Haitao**
  **Tianjin, 300300 (CN)**
 • **BI, Tengfei**
  **Tianjin, 300300 (CN)**
 • **YANG, Jialin**
  **Tianjin, 300300 (CN)**

 • **PEI, Yuanjin**
  **Tianjin, 300300 (CN)**
 • **LI, Gang**
  **Tianjin, 300300 (CN)**
 • **WANG, Jianshuo**
  **Tianjin, 300300 (CN)**
 • **SUN, Mingyu**
  **Tianjin, 300300 (CN)**
 • **GUO, Zilin**
  **Tianjin, 300300 (CN)**
 • **WANG, Limin**
  **Tianjin, 300300 (CN)**
 • **HOU, Zhiping**
  **Tianjin, 300300 (CN)**
 • **HU, Yue**
  **Tianjin, 300300 (CN)**
 • **XIN, Ning**
  **Tianjin, 300300 (CN)**

(74) Representative: **Chung, Hoi Kan**
  **Mandarin IP Limited**
  **7 Cherry Trees**
  **Great Shelford**
  **Cambridge CB22 5XA (GB)**

(54) **METHOD AND APPARATUS FOR MEASURING VEHICLE BRAKING ATTITUDE CHANGE, AND ELECTRONIC DEVICE**

(57)     The present invention relates to the technical field of testing of structural components or devices, and in particular to a method and an apparatus for measuring vehicle braking attitude change, and an electronic device. The method includes: generating a corresponding test task based on at least one preset measurement target under an autonomous emergency braking, AEB, braking working condition; determining whether a current test site meets a preset test condition based on the test task; and if the current test site meets the preset test condition, controlling at least one test vehicle meeting a preset measurement condition by an AEB braking robot in response to the test task to complete the at least one preset measurement target, and acquiring multiple groups of measurement data of the test vehicle in the test process, thereby obtaining a braking attitude change value of each test vehicle based on the multiple groups of measurement data and test data of the test vehicle. Therefore, the technical problem in the related art that the influence of AEB intervention on the vehicle attitude change is ignored to result in inadequate comprehensiveness of vehicle safety development and challenges in ensuring the safety performance of the vehicle during braking is solved.

FIG. 1

EP 4 775 463 A1

## Description

TECHNICAL FIELD

The present invention relates to the technical field of testing of structural components or devices, and in particular to a method and an apparatus for measuring vehicle braking attitude change, and an electronic device.

BACKGROUND OF THE INVENTION

Pedestrians and bicyclists, as vulnerable road users (VRU) among traffic participants, frequently disregard traffic signals and cross roads randomly outside crosswalks, which will increase the probability of collision between VRU and vehicles. At present, there is an ever increasing application of active safety means on vehicles. Active braking intervenes and forces the vehicle to brake before an accident, with the vehicle leaning forward due to the characteristics of shock adsorption and mass.

In the related art, the current test status of protecting the VRU by the vehicle is verified and developed based on a normal driving vehicle attitude, but the vehicle attitude change caused by autonomous emergency braking (AEB) intervention is not considered. This change often causes the front end structure of the vehicle to pitch forward and the colliding position of the pedestrian's leg to deviate, thereby affecting the incompleteness of vehicle safety development by vehicle enterprises. On the other hand, vehicle braking, as a dynamic process, is difficult to capture the vehicle attitude change in the actual state, and it is difficult for developers to find a feasible scheme for monitoring, thereby causing a certain difficulty in the actual safety performance development process of the vehicle by the vehicle enterprises, which is required to be improved.

BRIEF SUMMARY OF THE INVENTION

The present invention provides a method and an apparatus for measuring vehicle braking attitude change, and an electronic device, so as to solve the technical problem in the related art that the influence of AEB intervention on the vehicle attitude change is not considered to result in inadequate comprehensiveness of vehicle safety development and challenges in ensuring the safety performance of the vehicle during braking.

An embodiment of a first aspect of the present invention provides a method for measuring vehicle braking attitude change. An AEB braking robot for vehicle braking control is arranged on a test vehicle. The method includes the following steps: generating a corresponding test task based on at least one preset measurement target under an AEB braking working condition; determining whether a current test site meets a preset test condition based on the test task; and if the current test site meets the preset test condition, controlling at least one test vehicle meeting a preset measurement condition by the AEB braking robot in response to the test task to complete the at least one preset measurement target, and acquiring multiple groups of measurement data of the test vehicle in the test process, thereby obtaining a braking attitude change value of each test vehicle based on the multiple groups of measurement data and test data of the test vehicle.

An embodiment of a second aspect of the present invention provides an apparatus for measuring vehicle braking attitude change. An AEB braking robot for vehicle braking control is arranged on a test vehicle. The apparatus includes: a generation module, configured to generate a corresponding test task based on at least one preset measurement target under an AEB braking working condition; a determination module, configured to determine whether a current test site meets a preset test condition based on the test task; and a test module, configured to: under the condition that the current test site meets the preset test condition, control at least one test vehicle meeting a preset measurement condition by the AEB braking robot in response to the test task to complete the at least one preset measurement target, and acquire multiple groups of measurement data of the test vehicle in the test process, thereby obtaining a braking attitude change value of each test vehicle based on the multiple groups of measurement data and test data of the test vehicle.

An embodiment of a third aspect of the present invention provides an electronic device, including: a memory, a processor and a computer program stored in the memory and capable of running on the processor. The processor executes the program to implement the method for measuring vehicle braking attitude change according to the above embodiment.

According to the embodiments of the present invention, the corresponding test task can be generated according to the measurement target, and whether the current test site meets the preset test condition is determined, so that under the condition that the current test site meets the preset test condition, at least one test vehicle meeting the preset measurement condition is controlled by the AEB braking robot to complete at least one preset measurement target to reduce the potential safety hazard in the measurement process; and multiple groups of measurement data of the test vehicle in the test process are acquired to obtain the braking attitude change value of each test vehicle based on the multiple groups of data and the test data of the test vehicle, so that the vehicle attitude change caused by AEB intervening in the braking behavior is obtained, and it is convenient for relevant developers to develop and improve vehicle safety and related performance. Therefore, the technical problem in the related art that the influence of AEB intervention on the vehicle attitude change is not considered to result in inadequate comprehensiveness of vehicle safety development and challenges in ensuring the safety performance of the vehicle during braking is solved.

Additional aspects and advantages of the present invention will be partially given in the following description, and will partially become apparent from the following description or be learned from the practice of the present invention.

## BRIEF DESCRIPTION OF THE SEVERAL VIEWS OF THE DRAWINGS

The above and/or additional aspects and advantages of the present invention will become apparent and understandable from the description for the embodiments in conjunction with the drawings.

FIG. 1 is a flowchart of a method for measuring vehicle braking attitude change according to embodiments of the present invention;

FIG. 2 is a position simplified diagram according to an embodiment of the present invention;

FIG. 3 is a schematic diagram of a method for calculating a vehicle centroid inclination angle according to an embodiment of the present invention;

FIG. 4 is a schematic simplified diagram of a method for calculating a vehicle centroid inclination angle according to an embodiment of the present invention;

FIG. 5 is a schematic diagram of a test simulating human legs according to an embodiment of the present invention;

FIG. 6 is a structural schematic diagram of an apparatus for measuring vehicle braking attitude change according to embodiments of the present invention; and

FIG. 7 is a structural schematic diagram of an electronic device according to embodiments of the present invention.

## DETAILED DESCRIPTION OF THE INVENTION

The embodiments of the present invention are described in detail below, examples of the embodiments are shown in the drawings, where the same or similar labels throughout represent the same or similar elements or elements with the same or similar functions. The embodiments described below with reference to the drawings are exemplary, are intended to explain the present invention, and cannot be understood as limitations to the present invention.

A method and an apparatus for measuring vehicle braking attitude change, and an electronic device according to embodiments of the present invention are described below with reference to the drawings. For the technical problem in the background that the influence of AEB intervention on the vehicle attitude change is not considered to result in inadequate comprehensiveness of vehicle safety development and challenges in ensuring the safety performance of the vehicle during braking, the present invention provides a method for measuring vehicle braking attitude change. In the method, the corresponding test task can be generated according to the measurement target, and whether the current test site meets the preset test condition is determined, so that under the condition that the current test site meets the preset test condition, at least one test vehicle meeting the preset measurement condition is controlled by the AEB braking robot to complete at least one preset measurement target to reduce the potential safety hazard in the measurement process; and multiple groups of measurement data of the test vehicle in the test process are acquired to obtain the braking attitude change value of each test vehicle based on the multiple groups of data and the test data of the test vehicle, so that the vehicle attitude change caused by AEB intervening in the braking behavior is obtained, and it is convenient for relevant developers to develop and improve vehicle safety and related performance. Therefore, the technical problem in the related art that the influence of AEB intervention on the vehicle attitude change is not considered to result in inadequate comprehensiveness of vehicle safety development and challenges in ensuring the safety performance of the vehicle during braking is solved.

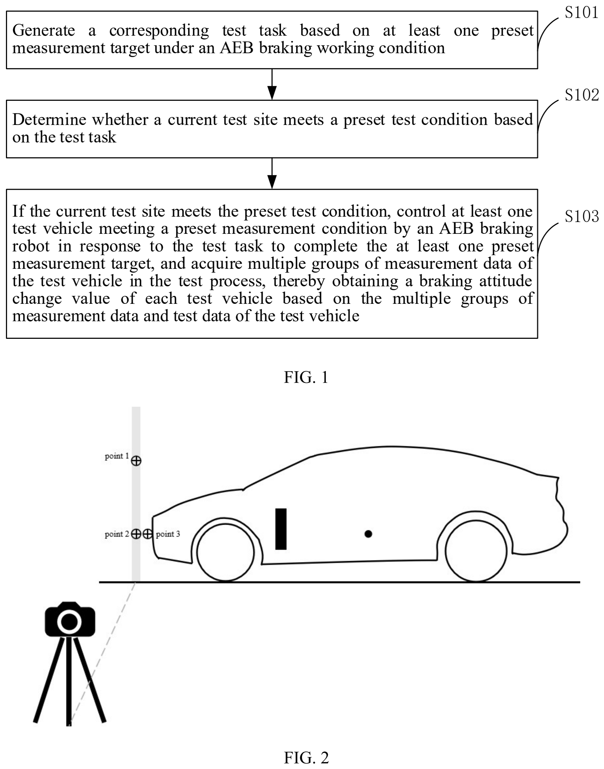

Specifically, FIG. 1 is a schematic flowchart of a method for measuring vehicle braking attitude change according to embodiments of the present invention.

As shown in FIG. 1, in the method for measuring vehicle braking attitude change, an AEB braking robot for vehicle braking control is arranged on a test vehicle. The method includes the following steps:

In the step S101, a corresponding test task is generated based on at least one preset measurement target under an AEB braking working condition.

According to the embodiments of the present invention, the corresponding test task can be generated according to a measurement working condition and a preset measurement target under the measurement working condition. For example, on the premise of simulating the AEB braking working condition of the vehicle, the measurement target may be vehicle body attitude data when the vehicle is static, and vehicle body attitude data of the vehicle at the instant of emergency braking.

The test task may include a test process and data required to be acquired in the test.

For example, the preset measurement target is to simulate the vehicle body attitude change of the vehicle under the AEB braking working condition that a front obstacle is detected and the vehicle can complete emergency braking before colliding with the obstacle. In such a case, the corresponding test task may be to respectively measure the vehicle body attitude data when the vehicle is static and the vehicle body attitude data at the instant of emergency braking at different driving speeds; and

the preset measurement target is to simulate the vehicle body attitude change of the vehicle under the AEB braking working condition that the front obstacle is detected and the vehicle cannot complete emergency braking before colliding with the obstacle. In such a case, the corresponding test task may be to respectively measure the vehicle body attitude data when the vehicle is static, the vehicle body attitude data at the instant of emergency braking at different driving speeds, and the attitude and damage situation of the obstacle before and after collision.

In the step S102, whether a current test site meets a preset test condition based on the test task is determined.

In the embodiments of the present invention, whether a test can be performed at the current test site can be determined according to the test task, for example, whether a test runway is flat and the light of the test site meets the data acquisition requirement; for another example, if the test task is a curve steering test, the current test site requires a curve; and for example, if the test task is an acceleration test, the current test site requires a straight runway with a sufficient length for the vehicle to accelerate.

Optionally, in an embodiment of the present invention, the step of determining whether the current test site meets a preset test condition based on a test task includes: the site information of the current test site is acquired, and whether an image acquisition device meeting a preset lens direction condition is arranged on one side of a runway of the test site is determined based on the site information; and if the image acquisition device meeting the preset lens direction condition is arranged on one side of the runway, it is determined that the current test site meets the preset test condition.

In some embodiments, when the test task is to measure the vehicle braking attitude change under the AEB condition, the current test site meeting the preset test condition may include: whether an image acquisition device is placed on one side of the runway, such as a high-speed camera; and whether a lens direction meets a certain condition, for example, a scale for performing the test task is set up in front of the central position of the lens, and the scale is required to keep longitudinally parallel with the lens.

In the step S103, if the current test site meets the preset test condition, at least one test vehicle meeting a preset measurement condition is controlled by an AEB braking robot in response to the test task to complete the at least one preset measurement target, and multiple groups of measurement data of the test vehicle in the test process are acquired, thereby obtaining a braking attitude change value of each test vehicle based on the multiple groups of measurement data and test data of the test vehicle.

In the actual execution process, the AEB braking robot may be configured to control the position, speed and braking of the test vehicle, and the AEB braking robot is placed at the position of a driver's cabin, thereby facilitating vehicle braking control.

According to the embodiments of the present invention, when the test task is executed, the AEB braking robot can be used to perform action control on the test vehicle to simulate the AEB braking working condition; an acquisition device, such as an image acquisition device, can be used to acquire multiple groups of measurement data in the test process, such as image data, vehicle-mounted angle meter data and laser displacement sensor data, so as to record the attitude change of the vehicle under the AEB braking working condition, thereby facilitating subsequent analysis; and the safety of the vehicle is adjusted by the analysis result, for example, an AEB braking parameter is adjusted, and a passive safety protection mechanism based on the current simulated AEB braking working condition is adjusted.

According to the embodiments of the present invention, a braking attitude change value can be calculated through the test data of the test vehicle, such as a vehicle speed, an accelerated speed/a decelerated speed, a braking trigger time data and multiple groups of measurement data.

For example, according to the embodiments of the present invention, the test vehicle can be controlled by the AEB braking robot to pass through the field of view of a high-speed camera from the other side of the runway at constant speeds of 60 km/h and 40 km/h. (In this process, the AEB braking robot is required to control the test vehicle to perform calibration many times with a yellow line in the center of the runway, and it is necessary to ensure that the test vehicle passes through the whole lens frame and keep a parallel relationship). The whole movement process of the test vehicle entering and leaving the lens frame is recorded by a high-speed camera. After many tests, the average angle of a vehicle-mounted angle meter at the constant speeds of 60 km/h and 40 km/h is stabilized around 0. This process is used to verify that the angle of the vehicle-mounted angle meter when the test vehicle travels at a constant speed keeps consistent with that when the test vehicle is in a static state.

According to the embodiments of the present invention, the test vehicle can be controlled by the AEB braking robot to start from the other side of the runway at the speed of 60 km/h, undergo emergency braking and reach the middle position of the high-speed camera at the speed of 40 km/h. (In this process, the AEB braking robot is required to control the test vehicle to perform calibration and standardization many times, and it is necessary to ensure that the test vehicle passes through the whole lens frame and keep a parallel relationship). The whole movement process of the test vehicle passing through the whole frame is recorded by the high-speed camera, and the instant angle $\theta$ of the vehicle-mounted angle meter from 60 km/h to 40 km/h is measured.

Therefore, the attitude change of the test vehicle is determined by the acquired picture and/or the angle of the vehicle-mounted angle meter.

Further, the attitude change value may be used as a data reference of vehicle braking safety control, for example, evaluating the braking stability, if the front of the vehicle pitches downward or upward excessively, the instability of the vehicle may be caused, thereby affecting the steering performance and the tire grip; a response threshold and other key parameters of an AEB system are calibrated by the attitude change value so as to ensure that the vehicle can be decelerated rapidly and stability and avoid the unnecessary pitching movement or reduce the danger of the pitching movement to other traffic participants; the attitude change value may also be used to improve the adjustment of a hanging system, so that the hanging system can better support the vehicle body during emergency braking, unnecessary pitching movement is reduced, and the controllability of the vehicle is improved.; in the braking process, the attitude change value will affect the comfort of passengers, and the acceleration distribution in the braking process can be optimized based on the attitude change value, so that the braking is smoother; and the attitude change value of the front of the vehicle can be used to assist in determining the dynamic behavior of the vehicle under the emergency braking condition, thereby providing more decision-making basis for avoiding collision.

Optionally, in one embodiment of the present invention, the step of controlling at least one test vehicle meeting a preset measurement condition by an AEB braking robot in response to the test task to complete the at least one preset measurement target includes: a measurement point of the test site is determined based on the position of an image acquisition device; the test vehicle is controlled by the AEB braking robot to brake at a target location with a target braking force, so that the test vehicle meets a preset image acquisition condition when passing through the measurement point.

In the actual execution process, the position of the measurement point enables the test vehicle to be located at the center of the lens of the image acquisition device when data of the test vehicle is acquired by the image acquisition device.

For example, according to the embodiments of the present invention, a cross mark can be stuck on a front part of the test vehicle, and the position of the cross mark is defined as a front position of the test vehicle. According to the embodiments of the present invention, a high-speed camera can be placed on one side of the runway, a scale is set up in front of the central position of the lens, and the scale is required to keep longitudinally parallel with the lens. First, according to the embodiments of the present invention, the front position of the vehicle can be at the center of the lens, the front position of the test vehicle keeps a parallel relationship with the scale and the high-speed camera in a longitudinal plane, this position of the test vehicle is defined as the measurement point, the longitudinal distances from the lens to the scale and from the lens to the front position of the vehicle are measured on site.

For example, according to the embodiments of the present invention, the deceleration degree of the test vehicle can be set from 60 km/h to 40 km/h, and the braking position of the AEB braking robot can be set, thereby ensuring that when the vehicle passes through the measurement point in the braking process, the speed of the test vehicle is reduced to 40 km/h at this position, and a real-time dynamic picture is captured by the high-speed camera.

Optionally, in one embodiment of the present invention, before the step of controlling at least one test vehicle meeting a preset measurement condition by an AEB braking robot in response to the test task to complete the at least one preset measurement target, the method further includes: under the condition that the test vehicle is located at a preset static position, a first preset point location and a second preset point location are selected from a target scale randomly, and the front position of the test vehicle is set to a third preset point location, where the target scale is determined by the position of the image acquisition device; or an initial angle of the vehicle-mounted angle meter when the test vehicle is located at the preset static position is calibrated to zero; or an initial ground clearance of the front position when the test vehicle is located at the preset static position is measured.

In some embodiments, according to the embodiments of the present invention, the attitude change of the test vehicle can be calculated by a video capture calculation method. According to the embodiments of the present invention, the scale in the picture of the high-speed camera and the high-speed camera, and the vehicle and the scale can be kept parallel with each other. First, at the static position, two points Point 1 and Point 2 are found on the scale, Point 3 is found at the front position of the vehicle, Point 2 is defined as the origin of the coordinate axis under the static condition, Point 3 and Point 2 are both on the X axis, the distance between Point 1 and Point 2 is 100 mm, Point 1 is defined as Z direction+100 mm, the driving direction of the vehicle is an X forward direction, the shooting direction of the camera is a Y forward direction, and a dynamic coordinate system is established in software.

In some other embodiments, according to the embodiments of the present invention, the attitude change of the test vehicle can be calculated by a vehicle centroid inclination angle calculation method. According to the embodiments of the present invention, an initial angle of a vehicle-mounted angle meter when the test vehicle is located at the preset static position can be calibrated to zero.

In addition, according to the embodiments of the present invention, the attitude change of the test vehicle can also be calculated by a laser displacement sensor measurement method. According to the embodiments of the present invention, the original device in the above method can be kept unchanged, a laser displacement sensor with an effective measurement distance of 1000 mm is placed at a cross mark position of the front end of the vehicle for measurement. According to the embodiments of the present invention, at the measurement point, the front position of the test vehicle can be controlled to be static at the central position of the camera lens, and the laser displacement sensor is used to measure the distance between the cross mark position of the front end of the vehicle and the ground.

Optionally, in one embodiment of the present invention, the step of obtaining the braking attitude change value of the test vehicle based on multiple groups of measurement data and the test data of the test vehicle includes: a dynamic coordinate system is constructed by a first preset point location, a second preset point location and a third preset point location, and an initial coordinate position of the third preset point location is obtained; and a braking coordinate position of the third point location when the test vehicle passes through a measurement point is acquired, and a height change value of the front position is calculated based on the initial coordinate position and the braking coordinate position.

As shown in FIG. 2, which is the static state of the test vehicle in the test process, according to the embodiments of the present invention, the actual distances of the longitudinal distances from the lens to the scale and from the lens to the front position of the test vehicle measured on site can be input into the software to establish a coordinate system with Point 1 as the origin. In the test process, the second step is to verify whether there is a height difference between Point 3 and the origin Point 1 of the original scale in the constant-speed driving process of the test vehicle. According to the video picture of the third step in the test process, the coordinate position of Point 3 of the front of the test vehicle is calculated in the coordinate system from the emergency braking at 60 km/h to 40 km/ in the third step in the test process, and the height obtained by the value of Point 3 in the static state calculated in the first step of the test is subtracted to obtain a drop height x of the front structure of the test vehicle when the braking speed of the test vehicle changes from 60 km/h to 40 km/h.

Optionally, in one embodiment of the present invention, the step of obtaining the braking attitude change value of the test vehicle based on multiple groups of measurement data and the test data of the test vehicle includes: a measurement angle of a vehicle-mounted angle meter when the test vehicle passes through the measurement point is acquired; and a height change value of the front position is calculated based on the measurement angle.

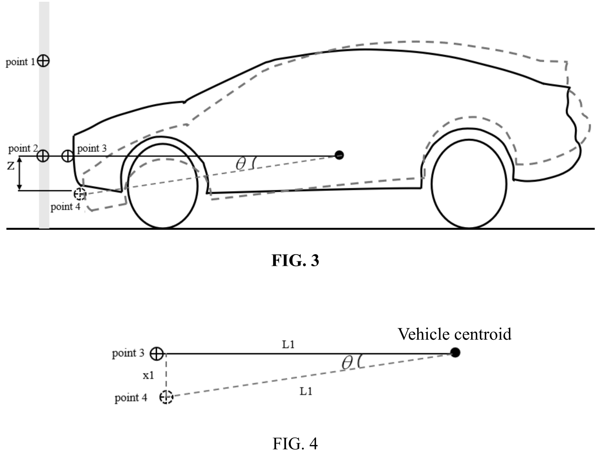

According to the embodiments of the present invention, the distance from the centroid to the cross mark at the front position of the vehicle is defined as L1, and the distance L1 remains unchanged during the braking of the vehicle. FIG. 3 shows the change of the centroid of the vehicle before and after braking. Through the instant angle $\theta$ of the vehicle-mounted angle meter measured by the method under the state that the braking speed of the vehicle changes from 60 km/h to 40 km/h, the vehicle-mounted angle meter can be arranged at the centroid position of the vehicle. FIG. 4 shows a schematic simplified diagram of a method for calculating a vehicle centroid inclination angle. The drop height x1 of the front structure of the vehicle when the braking speed of the vehicle changes from 60 km/h to 40 km/h can be obtained by the following formula:

$$x1 = L1 \sin\theta.$$

Optionally, in one embodiment of the present invention, the step of obtaining the braking attitude change value of the test vehicle based on multiple groups of measurement data and the test data of the test vehicle includes: an actual ground clearance of the front position when the test vehicle passes through the measurement point is measured; and a height change value of the front position is calculated based on the actual ground clearance and the initial ground clearance.

According to the embodiments of the present invention, at the measurement point of the runway, the front position of the test vehicle can be controlled to be static at the central position of the camera lens, and the laser displacement sensor is used to measure the distance between the cross mark position of the front end of the test vehicle and the ground. Subsequently, the test vehicle is controlled by the AEB braking robot to start from the other side of the runway at a speed of 60 km/h, undergo emergency braking (with a force of 350 N in a full brake application state) and arrive at the middle position of the high-speed camera at a speed of 40 km/h, the laser displacement sensor should be triggered before 50 ms before the front end of the test vehicle passes through the measurement point, the trigger signal is provided by a device placed in the vehicle (in this process, the AEB braking robot is required to control the test vehicle to perform calibration and standardization many times, and it is necessary to ensure that the test vehicle passes through the whole lens frame and keep a parallel relationship), and the distance between the test vehicle and the ground at the braking speed from 60 km/h to 40 km/h is measured. The drop height of the front structure of the test vehicle when the braking speed of the test vehicle changes from 60 km/h to 40 km/h can be calculated by comparing the distance difference between the static state and the braking process.

Optionally, in one embodiment of the present invention, the method further includes: braking attitude change values of all test vehicles are classified according to vehicle models of the test vehicles to obtain a classification result; the braking attitude change value corresponding to each vehicle model is preprocessed based on the classification result to obtain a braking attitude reference value of each vehicle model; and an active and passive safety parameter adjustment strategy of each vehicle model is generated based on the braking attitude reference value.

In the actual execution process, according to the embodiments of the present invention, many test are performed to obtain the braking attitude change values of the plurality of vehicles, and data can be classified according to the vehicle models.

A large number of braking attitude change values can be obtained under each vehicle model. It may be understood that there may be measurement errors influenced by the external environment or caused by the vehicle failure in the test process. Therefore, according to the embodiments of the present invention, data under each vehicle model can be preprocessed, that is, filtered and screened, to obtain data that can reflect the vehicle body attitude change of the vehicle model under the AEB braking working condition.

Further, according to the embodiments of the present invention, a braking attitude reference value capable of representing the braking attitude change of the vehicle model can be obtained by averaging or taking a median from the preprocessed data, so that parameters involved in the active and passive safety functions of each vehicle are adjusted according to the braking attitude reference value.

For example, according to the embodiments of the present invention, parameters of the AEB system, such as braking force and braking timing, can be adjusted based on the analysis result of the attitude change so as to reduce unnecessary vehicle body attitude change and improve the riding comfort and safety; and the energy during collision is reduced by reducing the speed before collision, thereby reducing injury to passengers.

In addition, when the measurement target is to measure the vehicle body attitude change value after collision, in addition to adjusting active and passive safety parameters according to the vehicle body attitude change, the adjustment of the active and passive safety parameters can be optimized in combination with the attitude change of an obstacle before and after collision and the damage value, thereby slowing down the influence of the collusion on the obstacle under the AEB braking working condition when collusion occurs.

After the adjustment, according to the embodiments of the present invention, the adjusted vehicle can also be put into the test again to confirm the adjustment effect.

With reference to FIG. 2 to FIG. 5, the working principle of the method for measuring vehicle braking attitude change according to the embodiments of the present invention is described in detail with one embodiment.

In the measurement of the embodiments of the present invention, the position, speed and braking of the test vehicle can be controlled by using a satellite positioning straight runway and an AEB braking robot, and the AEB braking robot is placed at the centroid position of the test vehicle. A cross mark is stuck on a front part of the test vehicle, and the position of the cross mark is defined as a front position of the test vehicle. A high-speed camera is placed on one side of the runway, a scale is set up in front of the central position of the lens, and the scale is required to keep longitudinally parallel with the lens.

First, according to the embodiments of the present invention, the front position of the vehicle can be at the center of the lens, the front position of the test vehicle keeps a parallel relationship with the scale and the high-speed camera in a longitudinal plane, this position of the test vehicle is defined as a test point, the longitudinal distances from the lens to the scale and from the lens to the front position of the vehicle are measured on site. The deceleration degree of the test vehicle is set from 60 km/h to 40 km/h, and the braking position of the AEB braking robot can be set, thereby ensuring that when the test vehicle passes through the test point in the braking process, the speed of the test vehicle is reduced to 40 km/h at this position, and a real-time dynamic picture is captured by the high-speed camera. To improve the accuracy of the height change of the front position of the test vehicle after emergency braking from 60 km/h to 40 km/h, the height change of the front position of the test vehicle is captured in three states, thereby further reducing the error value in the whole process.

Step S1: at the test point of the runway, the front position of the test vehicle is static at the central position of the camera lens, the image under the static state is captured by the high-speed camera, and the angle of the vehicle-mounted angle meter is calibrated to 0.

Step S2: the test vehicle is controlled by the AEB braking robot to pass through the field of view of a high-speed camera from the other side of the runway at constant speeds of 60 km/h and 40 km/h. (In this process, the AEB braking robot is required to control the test vehicle to perform calibration many times with a yellow line in the center of the runway, and it is necessary to ensure that the test vehicle passes through the whole lens frame and keep a parallel relationship). The whole movement process of the test vehicle entering and leaving the lens frame is recorded by a high-speed camera. After many tests, the average angle of a vehicle-mounted angle meter at the constant speeds of 60 km/h and 40 km/h is stabilized around 0. This process is used to verify that the angle of the vehicle-mounted angle meter when the test vehicle travels at a constant speed keeps consistent with that when the test vehicle is in a static state.

Step S3: the test vehicle is controlled by the AEB braking robot to start from the other side of the runway at the speed of 60 km/h, undergo emergency braking (with a force of 350 N in a full brake application state) and reach the middle position of the high-speed camera at the speed of 40 km/h. (In this process, the AEB braking robot is required to control the test vehicle to perform calibration and standardization many times, and it is necessary to ensure that the test vehicle passes through the whole lens frame and keep a parallel relationship). The whole movement process of the test vehicle passing through the whole frame is recorded by the high-speed camera, and the instant angle $\theta$ of the vehicle-mounted angle meter from 60 km/h to 40 km/h is measured.

Measurement method 1: video capture calculation method

The scale, the high-speed camera and the test vehicle mentioned in the test process are required as follows: the scale in the picture of the high-speed camera and the high-speed camera, and the test vehicle and the scale can be kept parallel with each other. First, at the static position, two points Point 1 and Point 2 are found on the scale, Point 3 is found at the front position of the test vehicle, Point 2 is defined as the origin of the coordinate axis under the static condition, Point 3 and Point 2 are both on the X axis, the distance between Point 1 and Point 2 is 100 mm, Point 1 is defined as Z direction+100 mm, the driving direction of the test vehicle is an X forward direction, the shooting direction of the camera is a Y forward direction, and a dynamic coordinate system is established in software.

FIG. 2 is the static state of the test vehicle in the step S1, the actual distances of the longitudinal distances from the lens to the scale and from the lens to the front position of the test vehicle measured on site are input into the software to establish a coordinate system with Point 1 as the origin.

In the measurement process, the second step is to verify whether there is a height difference between Point 3 and the origin Point 1 of the original scale in the constant-speed driving process of the test vehicle. According to the video picture of the third step in the test process, the coordinate position of Point 3 of the front of the test vehicle is calculated in the coordinate system from the emergency braking at 60 km/h to 40 km/ in the third step in the test process, and the height obtained by the value of Point 3 in the static state calculated in the first step of the test is subtracted to obtain a drop height x of the front structure of the test vehicle when the braking speed of the test vehicle changes from 60 km/h to 40 km/h.

Measurement method 2: test vehicle centroid inclination angle calculation method

According to the embodiments of the present invention, the test vehicle centroid inclination angle calculation method can be performed according to the above parameters, and the verification method determines that the centroid movement of the test vehicle may be ignored in the braking process of the test vehicle.

The distance from the centroid to the cross mark at the front position of the test vehicle is defined as L1, and the distance L1 remains unchanged during the braking of the test vehicle. FIG. 3 shows the change of the centroid of the test vehicle before and after braking. Through the instant angle $\theta$ of the vehicle-mounted angle meter measured by the calculation method under the state that the braking speed of the test vehicle changes from 60 km/h to 40 km/h. FIG. 4 shows a schematic simplified diagram of a method for calculating a test vehicle centroid inclination angle. The drop height x1 of the front structure of the test vehicle when the braking speed of the test vehicle changes from 60 km/h to 40 km/h can be obtained by the following formula:

$$|x1=L1 \sin\theta.$$

Measurement method 3: laser displacement sensor measurement method

The original device in the above calculation method is kept unchanged, a laser displacement sensor with an effective measurement distance of 1000 mm is placed at a cross mark position of the front end of the test vehicle for measurement. In the step S1, according to the embodiments of the present invention, at the test point of the runway, the front position of the test vehicle can be static at the central position of the camera lens, and the laser displacement sensor is used to measure the distance between the cross mark position of the front end of the test vehicle and the ground.

Subsequently, the step S3 is performed as follows: according to the embodiments of the present invention, the test vehicle can be controlled by the AEB braking robot to start from the other side of the runway at a speed of 60 km/h, undergo emergency braking (with a force of 350 N in a full brake application state) and arrive at the middle position of the high-speed camera at a speed of 40 km/h, the laser displacement sensor should be triggered before 50 ms before the front end of the test vehicle passes through the test point, the trigger signal is given by a device placed in the vehicle (in this process, the AEB braking robot is required to control the test vehicle to perform calibration and standardization many times, and it is necessary to ensure that the test vehicle passes through the whole lens frame and keep a parallel relationship), and the distance between the test vehicle and the ground at the braking speed from 60 km/h to 40 km/h is measured. The drop height of the front structure of the test vehicle when the braking speed of the test vehicle changes from 60 km/h to 40 km/h can be calculated by comparing the distance difference between the static state and the braking process.

It should be noted that enterprise developers can perform braking test of the test vehicle by any one of the above methods, measure the drop height of the front structure of the test vehicle under development during braking from any speed to 40 km/h, develop the comprehensive coverage performance on the safety system of the test vehicle, and help to further improve the safety of the test vehicle.

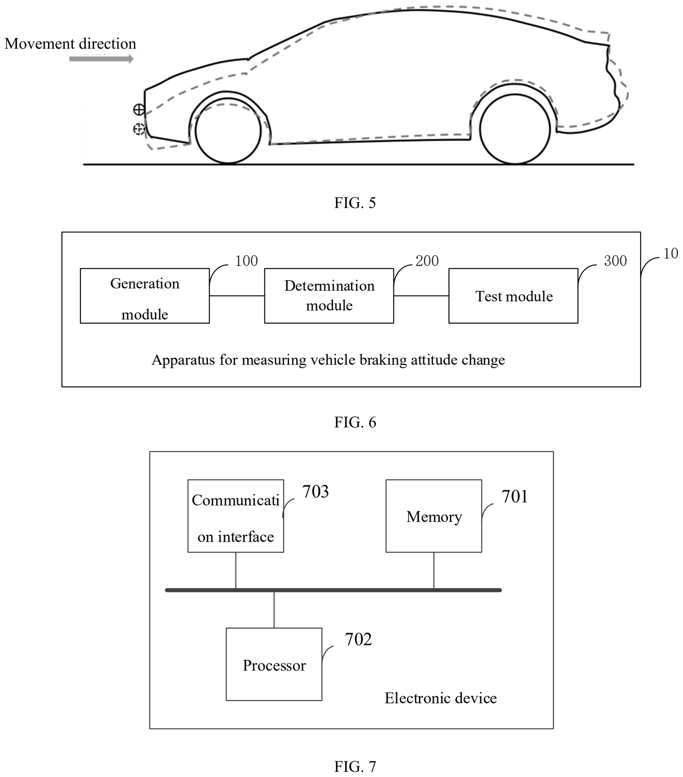

Taking the safety of pedestrians and the test vehicle as an example, the specific implementation plan of the development of the test vehicle is as follows:
First, as shown in FIG. 5, according to the embodiments of the present invention, the front and rear wheel brows of the test vehicle can be adjusted to the vehicle body attitude under the normal driving attitude of the test vehicle and at the speed of 40 km/h, the test vehicle is static on an impact platform after adjustment, the height H from the cross cursor position of the front end of the test vehicle is recorded by a 1000 mm steel ruler, and the simulated human leg is used to impact at the speed of 40 km/h in the movement direction to measure the damage to each position of the simulated human leg. The front and rear wheel brows of the test vehicle are adjusted to the height H-x of the front structure of the test vehicle at the braking speed of the test vehicle from 60 km/h to 40 km/h, and the simulated human leg is used again to impact at the speed of 40 km/h in the movement direction to measure the damage to each position of the simulated human leg, thereby developing the pedestrian protection performance of the test vehicle in the braking state from 60 km/h to 40 km/h.

In conclusion, according to the embodiments of the present invention, the height change of the front position of the vehicle body in the braking process of the vehicle can be measured rapidly, and the measurement accuracy is verified by many methods. In the related art, enterprises only can obtain the height change of the front position in the braking process of the vehicle from simulation software, but there are many problems of low simulation accuracy, complex structure of a vehicle subsystem and the like, so it is difficult to truly restore the actual situation in the braking process of the vehicle, thereby posing challenges for automobile enterprises in vehicle safety development. According to the embodiments of the present invention, the height of the front position of the vehicle body in the braking state of the vehicle can be measured, the safety of pedestrians in active and passive combined scenarios can be developed in advance in vehicle-pedestrian accidents, thereby providing technical support for the subsequent development of vehicle safety by the enterprises.

According to the method for measuring vehicle braking attitude change provided by the embodiments of the present invention, the corresponding test task can be generated according to the measurement target, and whether the current test site meets the preset test condition is determined, so that under the condition that the current test site meets the preset test condition, at least one test vehicle meeting the preset measurement condition is controlled by the AEB braking robot to complete at least one preset measurement target to reduce the potential safety hazard in the measurement process; and multiple groups of measurement data of the test vehicle in the test process are acquired to obtain the braking attitude change value of each test vehicle based on the multiple groups of data and the test data of the test vehicle, so that the vehicle attitude change caused by AEB intervening in the braking behavior is obtained, and it is convenient for relevant developers to develop and improve vehicle safety and related performance. Therefore, the technical problem in the related art that the influence of AEB intervention on the vehicle attitude change is not considered to result in inadequate comprehensiveness of vehicle safety development and challenges in ensuring the safety performance of the vehicle during braking is solved.

Secondly, an apparatus for measuring vehicle braking attitude change provided by the embodiments of the present invention is described with reference to the drawings.

FIG. 6 is a schematic block diagram of an apparatus for measuring vehicle braking attitude change according to embodiments of the present invention.

As shown in FIG. 6, in the apparatus 10 for measuring vehicle braking attitude change, an AEB braking robot for vehicle braking control is arranged on a test vehicle. The apparatus 10 for measuring vehicle braking attitude change includes: a generation module 100, a determination module 200 and a test module 300.

Specifically, the generation module 100 is configured to generate a corresponding test task based on at least one preset measurement target under an AEB braking working condition;

the determination module 200 is configured to determine whether a current test site meets a preset test condition based on the test task; and

the test module 300 is configured to: under the condition that the current test site meets the preset test condition, control at least one test vehicle meeting a preset measurement condition by the AEB braking robot in response to the test task to complete the at least one preset measurement target, and acquire multiple groups of measurement data of the test vehicle in the test process, thereby obtaining a braking attitude change value of each test vehicle based on the multiple groups of measurement data and test data of the test vehicle.

Optionally, in one embodiment of the present invention, the determination module 200 includes: a determination unit and a first determining unit.

The determination unit is configured to acquire site information of the current test site, and determine whether an image acquisition device meeting a preset lens direction condition is arranged on one side of a runway of the test site based on the site information.

The first determining unit is configured to determine that the current test site meets the preset test condition under the condition that the image acquisition device meeting the preset lens direction condition is arranged on one side of the runway.

Optionally, in one embodiment of the present invention, the test module 300 includes: a second determining module and a control unit.

The second determining unit is configured to determine a measurement point of the test site based on the position of the image acquisition device.

The control unit is configured to control the test vehicle by the AEB braking robot to brake at a target location with a target braking force to enable the test vehicle to meet a preset image acquisition condition when passing through the measurement point.

Optionally, in one embodiment of the present invention, the apparatus 10 for measuring vehicle braking attitude change further includes: an acquisition module or a calibration module or a measurement module.

The acquisition module is configured to: when the test vehicle is located at a preset static position, randomly selecting a first preset point location and a second preset point location on a target scale, and setting a front position of the test vehicle as a third preset point location, where the target scale is determined by the position of the image acquisition device.

The calibration module is configured to calibrate an initial angle of a vehicle-mounted angle meter when the test vehicle is located at the preset static position to zero.

The measurement module is configured to measure an initial ground clearance of the front position when the test vehicle is located at the preset static position.

Optionally, in one embodiment of the present invention, the test module 300 includes: a construction unit and a first calculation unit.

The construction unit is configured to construct a dynamic coordinate system by using the first preset point location, the second preset point location and the third preset point location, and obtain an initial coordinate position of the third preset point location.

The first calculation unit is configured to acquire a braking coordinate position of the third preset point location when the test vehicle passes through the measurement point, and calculate a height change value of the front position based on the initial coordinate position and the braking coordinate position.

Optionally, in one embodiment of the present invention, the test module 300 includes: an acquisition unit and a second calculation unit.

The acquisition unit is configured to acquire a measurement angle of the vehicle-mounted angle meter when the test vehicle passes through the measurement point.

The second calculation unit is configured to calculate a height change value of the front position based on the measurement angle.

Optionally, in one embodiment of the present invention, the test module 300 includes: a measurement unit and a third calculation unit.

The measurement unit is configured to measure an actual ground clearance of the front position when the test vehicle passes through the measurement point.

The third calculation unit is configured to calculate a height change value of the front position based on the actual ground clearance and the initial ground clearance.

Optionally, in one embodiment of the present invention, the apparatus 10 for measuring vehicle braking attitude change further includes: a classification module, a processing module and a generation module.

The classification module is configured to classify braking attitude change values of all test vehicles according to vehicle models of the test vehicles to obtain a classification result.

The processing module is configured to preprocess the braking attitude change value corresponding to each vehicle model based on the classification result to obtain a braking attitude reference value of each vehicle model.

The generation module is configured to generate an active and passive safety parameter adjustment strategy of each vehicle model based on the braking attitude reference value.

It should be noted that the explanation of the method for measuring vehicle braking attitude change of the embodiment is also applicable to the apparatus for measuring vehicle braking attitude change of this embodiment, and will not be elaborated here.

According to the apparatus for measuring vehicle braking attitude change provided by the embodiments of the present invention, the corresponding test task can be generated according to the measurement target, and whether the current test site meets the preset test condition is determined, so that under the condition that the current test site meets the preset test condition, at least one test vehicle meeting the preset measurement condition is controlled by the AEB braking robot to complete at least one preset measurement target to reduce the potential safety hazard in the measurement process; and multiple groups of measurement data of the test vehicle in the test process are acquired to obtain the braking attitude change value of each test vehicle based on the multiple groups of data and the test data of the test vehicle, so that the vehicle attitude change caused by AEB intervening in the braking behavior is obtained, and it is convenient for relevant developers to develop and improve vehicle safety and related performance. Therefore, the technical problem in the related art that the influence of AEB intervention on the vehicle attitude change is not considered to result in inadequate comprehensiveness of vehicle safety development and challenges in ensuring the safety performance of the vehicle during braking is solved.

FIG. 7 is a structural schematic diagram of an electronic device according to embodiments of the present invention. The electronic device may include:

a memory 701, a processor 702 and a computer program stored in the memory 701 and capable of running on the processor 702.

When the processor 702 executes the program, the method for measuring vehicle braking attitude change according to the above embodiments of the present invention is implemented.

Further, the electronic device further includes:

a communication interface 703, for communication between the memory 701 and the processor 702.

The memory 701 is configured to store a computer program capable of running on the processor 702.

The memory 701 may include a high-speed random access memory (RAM), and may further include a non-volatile memory, such as at least one disk memory.

If the memory 701, the processor 702 and the communication interface 703 are implemented independently, the communication interface 703, the memory 701 and the processor 702 can be connected to one another through a bus and complete mutual communication. The bus may be an industrial standard architecture (ISA) bus, a peripheral component interconnect (PCI) bus or an extended industry standard architecture (EISA) bus. The bus may be divided into an address bus, a data bus, a control bus, etc. For ease of representation, only one thick line is shown in FIG. 7, but it does not indicate that there is only one bus or one type of bus.

Optionally, in specific implementation, if the memory 701, the processor 702 and the communication interface 703 are integrated on one chip, the memory 701, the processor 702 and the communication interface 703 can complete mutual communication through an internal interface.

The processor 702 may be central processing unit (CPU), or be an application specific integrated circuit (ASIC), or be configured as one or more integrated circuits to implement the embodiments of the present invention.

This embodiment further provides a computer readable storage medium. A computer program is stored on the computer readable storage medium, and when the program is executed by the processor, the method for measuring vehicle braking attitude change is implemented.

Embodiments of the present invention further provide a computer program product, including a computer program. When the computer program is executed by the processor, the method for measuring vehicle braking attitude change provided by the embodiments of the present invention is implemented.

In addition, reference to the term "one embodiment", "some embodiments", "an example", "a specific example" or "some examples" or the like means that a specific feature, structure, material or characteristic described in combination with the embodiment or example are included in at least one embodiment or example of the present invention. In this specification, schematic expressions of the above terms need not be directed to the same embodiment or example. Moreover, the particular features, structures, materials or characteristics described may be combined in any suitable manner in any one or N embodiments/examples. In addition, different embodiments or examples described in the specification, as well as features of different embodiments or examples, may be combined by those skilled in the art without contradicting each other.

Moreover, the terms "first" and "second" are only for the purpose of description, and cannot be interpreted as indicating or implying relative importance or implicitly indicating the quantity of the indicated technical features. Therefore, the features defined with "first" and "second" can explicitly or implicitly include one or more features. In the description of the present invention, "N" means at least two, for example, two or three, unless otherwise clearly and specifically limited.

Any process or method description in the flowchart or described here in other manners may be understood as representing a module, segment or part of a code of an executable instruction including one or N steps for implementing a customized logic function or process. Moreover, the scope of the preferred embodiments of the present invention includes other implementations. Functions may be performed not according to the order shown or discussed, including a substantially simultaneous manner or a reverse order according to the functions involved, which should be understood by those skilled in the technical field which the embodiments of the present invention belong to.

The logic and/or steps represented in the flowchart or described in other manners here, for example, may be regarded as a sequenced list of executable instructions for achieving logic functions, may be specifically implemented in any computer readable medium for instruction execution systems, apparatuses or devices (such as a system based on a computer, a system including a processor or other system capable of fetching instructions from the instruction execution system, apparatus or device and executing the instructions) to use, or may be used in combination with these instruction execution systems, apparatuses or devices. In this specification, "computer readable medium" may be any apparatus that may include, store, communicate, propagate or transmit a program for use by or in combination with instruction execution systems, apparatuses or devices. More specific examples (non-exhaustive list) of the computer readable medium include the followings: an electrical connection part (electronic apparatus) with one or N wires, a portable computer diskette (magnetic apparatus), a random access memory (RAM), a read-only memory (ROM), an erasable programmable read-only memory (EPROM or flash memory) and a portable compact disc read-only memory (CDROM). In addition, the computer readable medium may even be paper or other appropriate mediums on which the program can be printed, because the program can be obtained electronically by optically scanning the paper or other mediums and then editing, interpreting or processing in other manners if necessary, and then is stored in the computer memory.

It should be understood that various parts of the present invention may be implemented by hardware, software, firmware or a combination thereof. In the above embodiments, N steps or methods may be implemented by software or firmware stored in the memory or executed by an appropriate instruction execution system. For example, if implemented by the hardware, as in another embodiment, the N steps or methods can be implemented by any one or a combination thereof in the following technologies: a discrete logic circuit with a logic gate circuit for achieving a logic function for a data signal, an application-specific integrated circuit with an appropriate combined logic gate circuit, a programmable gate array (PGA), a field-programmable gate array (FPGA) and the like.

Those of ordinary skill in the art can understand that implementing all or some of the steps carried by the above embodiment method can be completed by instructing related hardware through the program, the program may be stored in a computer readable storage medium, and the program includes one or a combination of the steps of the method embodiment when being executed.

Additionally, various function units in various embodiments of the present invention may be integrated into one processing module, each unit may physically exist singly, and two or more units may also be integrated into one processing module. The integrated modules may be implemented in the form of hardware and may also be implemented in the form of a software function module. The integrated modules may be stored in a computer-readable storage medium if being implemented in the form of the software function module and sold or used as an independent product.

The above-mentioned storage medium may be a read only memory, a magnetic disk or an optical disk or the like. Although the embodiments of the present invention have been shown and described above, it may be understood that the above embodiments are exemplary and are not to be construed as limiting the present invention. Changes, modifications, substitutions and variations of the above embodiments may be made by those skilled in the art within the scope of the present invention.

**Claims**

1. A method for measuring vehicle braking attitude change, **characterized in that** an autonomous emergency braking, AEB, braking robot for vehicle braking control is arranged on a test vehicle, the method comprises the following steps:

   generating a corresponding test task based on at least one preset measurement target under an AEB braking working condition;
   determining whether a current test site meets a preset test condition based on the test task; and
   if the current test site meets the preset test condition, controlling at least one test vehicle meeting a preset measurement condition by the AEB braking robot in response to the test task to complete the at least one preset measurement target, and acquiring multiple groups of measurement data of the test vehicle in the test process, thereby obtaining a braking attitude change value of each test vehicle based on the multiple groups of measurement data and test data of the test vehicle.

2. The method for measuring vehicle braking attitude change according to claim 1, **characterized in that** the step of determining whether a current test site meets a preset test condition based on the test task comprises:

   acquiring site information of the current test site, and determining whether an image acquisition device meeting a preset lens direction condition is arranged on one side of a runway of the current test site based on the site information; and
   if the image acquisition device meeting the preset lens direction condition is arranged on one side of the runway, determining that the current test site meets the preset test condition.

3. The method for measuring vehicle braking attitude change according to claim 2, **characterized in that** the step of controlling at least one test vehicle meeting a preset measurement condition by the AEB braking robot in response to the test task to complete the at least one preset measurement target comprises:

   determining a measurement point of the current test site based on the position of the image acquisition device; and
   controlling the test vehicle by the AEB braking robot to brake at a target location with a target braking force to enable the test vehicle to meet a preset image acquisition condition when passing through the measurement point.

4. The method for measuring vehicle braking attitude change according to claim 3, **characterized in that** before the step of controlling at least one test vehicle meeting a preset measurement condition by the AEB braking robot in response to the test task to complete the at least one preset measurement target, the method further comprises:

   when the test vehicle is located at a preset static position, randomly selecting a first preset point location and a second preset point location on a target scale, and setting a front position of the test vehicle as a third preset point location, the target scale being determined by the position of the image acquisition device; or
   calibrating an initial angle of a vehicle-mounted angle meter when the test vehicle is located at the preset static position to zero; or
measuring an initial ground clearance of the front position when the test vehicle is located at the preset static position.

**5.** The method for measuring vehicle braking attitude change according to claim 4, **characterized in that** the step of obtaining a braking attitude change value of each test vehicle based on the multiple groups of measurement data and test data of the test vehicle comprises:

constructing a dynamic coordinate system by using the first preset point location, the second preset point location and the third preset point location, and obtaining an initial coordinate position of the third preset point location; and acquiring a braking coordinate position of the third preset point location when the test vehicle passes through the measurement point, and calculating a height change value of the front position based on the initial coordinate position and the braking coordinate position.

**6.** The method for measuring vehicle braking attitude change according to claim 4, **characterized in that** the step of obtaining a braking attitude change value of each test vehicle based on the multiple groups of measurement data and test data of the test vehicle comprises:

acquiring a measurement angle of the vehicle-mounted angle meter when the test vehicle passes through the measurement point; and calculating the height change value of the front position based on the measurement angle.

**7.** The method for measuring vehicle braking attitude change according to claim 4, **characterized in that** the step of obtaining a braking attitude change value of each test vehicle based on the multiple groups of measurement data and test data of the test vehicle comprises:

measuring an actual ground clearance of the front position when the test vehicle passes through the measurement point; and calculating a height change value of the front position based on the actual ground clearance and the initial ground clearance.

**8.** The method according to claim 1, further comprising:

classifying braking attitude change values of all test vehicles according to vehicle models of the test vehicles to obtain a classification result; preprocessing the braking attitude change value corresponding to each vehicle model based on the classification result to obtain a braking attitude reference value of each vehicle model; and generating an active and passive safety parameter adjustment strategy of each vehicle model based on the braking attitude reference value.

**9.** An apparatus for measuring vehicle braking attitude change, **characterized in that** an autonomous emergency braking, AEB, braking robot for vehicle braking control is arranged on a test vehicle, and the apparatus comprises:

a generation module, configured to generate a corresponding test task based on at least one preset measurement target under an AEB braking working condition; a determination module, configured to determine whether a current test site meets a preset test condition based on the test task; and a test module, configured to: under the condition that the current test site meets the preset test condition, control at least one test vehicle meeting a preset measurement condition by the AEB braking robot in response to the test task to complete the at least one preset measurement target, and acquire multiple groups of measurement data of the test vehicle in the test process, thereby obtaining a braking attitude change value of each test vehicle based on the multiple groups of measurement data and test data of the test vehicle.

**10.** An electronic device, comprising: a memory, a processor and a computer program stored in the memory and capable of running on the processor, **characterized in that** the processor executes the program to implement the method for measuring vehicle braking attitude change according to any one of claims 1 to 8.

Generate a corresponding test task based on at least one preset measurement target under an AEB braking working condition —S101

Determine whether a current test site meets a preset test condition based on the test task —S102

If the current test site meets the preset test condition, control at least one test vehicle meeting a preset measurement condition by an AEB braking robot in response to the test task to complete the at least one preset measurement target, and acquire multiple groups of measurement data of the test vehicle in the test process, thereby obtaining a braking attitude change value of each test vehicle based on the multiple groups of measurement data and test data of the test vehicle —S103

FIG. 1

FIG. 2

point 1 ⊕

point 2 ⊕    ⊕ point 3
Z
⊕
point 4

$\theta$ I

**FIG. 3**

point 3 ⊕    L1    Vehicle centroid ●
x1
point 4 ⊕    L1    $\theta$ I

FIG. 4

FIG. 5

FIG. 6

FIG. 7

EUROPEAN SEARCH REPORT

Application Number

EP 25 22 7320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 537 241 A (BAIC GROUP ORV CO LTD) 14 August 2020 (2020-08-14) | 1,8-10 | INV. B60T8/88 |
| Y | * paragraph [0003] - paragraph [0029] * | 1,2,8-10 | B60T17/22 |
| A | * paragraphs [0044], [0045], [0050] * | 3 | B60W40/12 G01M17/007 |
| | ----- | | |
| Y | KR 102 011 664 B1 (UNIV KEIMYUNG IACF [KR]) 19 August 2019 (2019-08-19) * paragraph [0004] - paragraph [0009] * * claim 10 * | 1,8-10 | |
| | ----- | | |
| Y | CN 114 791 362 A (BEIJING MOMENTA TECH CO LTD) 26 July 2022 (2022-07-26) * paragraphs [0001], [0046], [0047] * | 1,8-10 | |
| | ----- | | |
| Y | US 2021/229680 A1 (CHAKRAVARTY PUNARJAY [US] ET AL) 29 July 2021 (2021-07-29) | 2 | |
| A | * paragraphs [0027], [0030], [0031], [0034], [0040] * * paragraph [0043] - paragraph [0045] * * figure 2 * | 3-7 | |
| | ----- | | **TECHNICAL FIELDS SEARCHED (IPC)** B60T B60W G01M |

The present search report has been drawn up for all claims

| Place of search | Date of completion of the search | Examiner |
|---|---|---|
| Munich | 28 April 2026 | Colonna, Massimo |

EPO FORM 1503 03.82 (P04C01)

## ANNEX TO THE EUROPEAN SEARCH REPORT
## ON EUROPEAN PATENT APPLICATION NO.

EP 25 22 7320

28-04-2026

| Patent document cited in search report | | Publication date | Patent family member(s) | | Publication date |
|---|---|---|---|---|---|
| CN 111537241 | A | 14-08-2020 | NONE | | |
| KR 102011664 | B1 | 19-08-2019 | NONE | | |
| CN 114791362 | A | 26-07-2022 | NONE | | |
| US 2021229680 | A1 | 29-07-2021 | CN | 113177429 A | 27-07-2021 |
| | | | DE | 102021101270 A1 | 29-07-2021 |
| | | | US | 2021229680 A1 | 29-07-2021 |

For more details about this annex : see Official Journal of the European Patent Office, No. 12/82